Europäisches Patentamt

European Patent Office

Office européen des brevets

(11) Numéro de publication: **0 241 369**
**B1**

(12) FASCICULE DE BREVET EUROPEEN

(45) Date de publication du fascicule du brevet:
07.02.90

(51) Int. Cl.⁴: **F16K 37/00**, G01K 11/16

(21) Numéro de dépôt: 87400765.1

(22) Date de dépôt: 07.04.87

(54) Embouts de robinets sanitaires et douchettes avec indication de temperature.

(30) Priorité: 08.04.86 FR 8604992

(43) Date de publication de la demande:
14.10.87 Bulletin 87/42

(45) Mention de la délivrance du brevet:
07.02.90 Bulletin 90/6

(84) Etats contractants désignés:
AT BE CH DE ES FR GB IT LI LU NL SE

(56) Documents cités:
FR-A- 2 458 062
FR-A- 2 541 751
US-A- 4 281 543

(73) Titulaire: Coll, Alain, 10, rue des Albatros,
F-77200 Croissy Beaubourg(FR)

(72) Inventeur: Coll, Alain, 10, rue des Albatros,
F-77200 Croissy Beaubourg(FR)

(74) Mandataire: Pinguet, André, Cabinet de Propriété
Industrielle CAPRI 28 bis, avenue Mozart,
F-75016 Paris(FR)

## Description

La présente invention concerne un dispositif permettant, sur un robinet simple, un mélangeur ou un mitigeur ou une douchette, d'indiquer la température de l'eau chaude ou mitigée par l'intermédiaire d'un dispositif spécialement conçu à cet effet.

A ce jour, aucun dispositif simple n'affiche la température à la sortie de ces robinetteries. Ces dernières se terminent à leur extrémité par un brise-jet, un mousseur ou un diffuseur sans indication de température. On a déjà proposé de réaliser des robinets dont une paroi comporte un thermomètre à cristaux liquides encastré dans un évidement de ladite paroi (document FR-A 2 541 751). On a aussi proposé des poignées de douche dont la chambre, ayant une paroi perforée, comporte une autre paroi munie d'un thermomètre à cristaux liquides (document US-A 4 281 543). Ces dispositifs ne sont pas simples. Si l'on désire les adapter, il faut changer la robinetterie, ce qui est coûteux.

Le dispositif selon l'invention permet de remédier à cet inconvénient.

L'invention a pour objet un dispositif adaptable à une quelconque robinetterie telle qu'une robinetterie sanitaire, mitigeur, douchette ou similaire, dispositif du genre constitué par un élément cylindrique adaptable à une extrémité filetée ou non de robinetterie et pouvant comporter des moyens permettant un effet du type brise-jet, aérateur, réducteur de débit ou analogue, caractérisé en ce qu'une feuille thermographique à cristaux liquides est appliquée sur la paroi cylindrique dudit élément cylindrique, et en ce que ladite feuille est recouverte par une enveloppe cylindrique transparente protectrice. ·

Dans une forme de réalisation avantageuse, l'enveloppe extérieure transparente présente une face bombée donnant un effet de loupe pour la lecture des chiffres. En variante, l'enveloppe extérieure transparente présente une face à facettes faisant effet de réflecteur permettant une lecture plus verticale.

L'enveloppe extérieure peut être collée ou soudée, ou moulée sur le cylindre.

Selon une réalisation préférentielle, la bande thermographique sera directement incluse dans l'enveloppe transparente.

D'autres caractéristiques et avantages de l'invention apparaîtront au cours de la description qui va suivre, donnée à titre d'exemple non limitatif, en regard des dessins ci-joints, sur lesquels:

la figure 1 représente en coupe un exemple de dispositif selon l'invention ; et,

la figure 2 représente le dispositif tout entier selon l'invention.

Ce dispositif est destiné à remplacer les embouts classiques montés en série par les différents constructeurs.

Le montage, très simple, s'effectue par simple vissage en lieu et place de l'embout classique.

Pour l'adaptation à une quelconque robinetterie, ce dispositif peut être constitué par exemple d'une partie cylindrique ou bague en laiton 1 chromé ou traité permettant de s'adapter aux extrémités filetées ou taraudées des différents modèles et marques de robinets mélangeurs et mitigeurs.

La hauteur de ce dispositif est usuellement d'environ 2 cm ; il comporte à son extrémité amont un filetage ou un taraudage 11, par exemple 3/8, 1/2 ou 3/4 permettant de le visser sur les extrémités d'écoulement de l'eau des robinets, mélangeurs et mitigeurs.

Il comporte, dans une rainure 12 spécialement aménagée à cet effet, une feuille thermographique à cristaux liquides 3 appliquée sur la circonférence du dispositif selon l'invention.

Ce dispositif contient à l'intérieur un élément 2 tel qu'un brise-jet, un ébulliseur, ou un réducteur de débit par exemple et à l'extérieur, une enveloppe protectrice 4 en résine transparente permettant la lecture des températures affichées par les cristaux liquides.

Selon une variante, cette enveloppe présente une face bombée donnant un effet de loupe, ou des facettes faisant effet de réflecteur permettant une lecture plus verticale.

L'enveloppe est fixée par vissage sur le dispositif décrit ci-dessus ; son étanchéité est assurée par un joint torique 5 contenu dans une rainure spécialement aménagée à cet effet sur le dispositif.

Selon une réalisation préférentielle, la bandfe thermographique sera directement incluse dans l'enveloppe transparente.

Pour l'adaptation à une douchette, la bague peut être intercalée au raccordement entre le flexible et la douchette.

Le dispositif selon l'invention est particulièrement destiné à équiper les robinetteries sanitaires ainsi que les douchettes.

Lors de l'écoulement de l'eau, la température de celle-ci est communiquée par simple conduction à la feuille de cristaux liquides qui réagit selon ses caractéristiques et affiche alors la température de l'eau utilisée, ou un symbole indiquant la progression de température.

La plage de température couverte est de 25°C à 60°C.

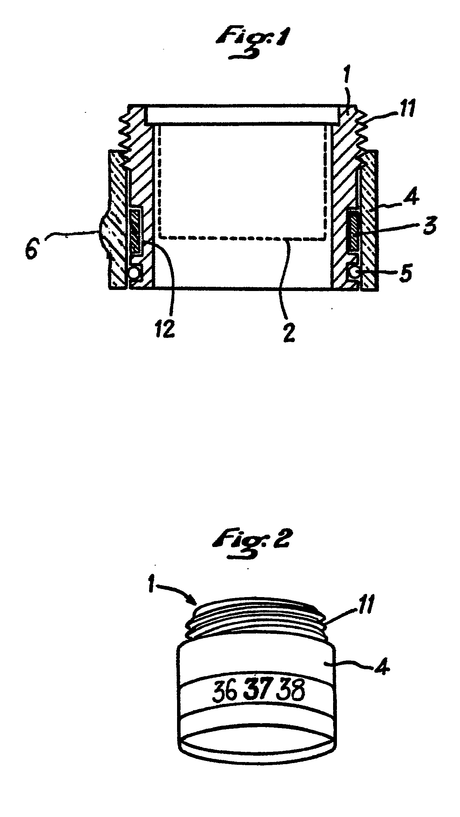

On voit que le dispositif selon l'invention est simple et peu coûteux. Il peut être mis en place par n'importe quel utilisateur, sans exiger le déplacement d'un spécialiste. En cas de détérioration de l'élément thermométrique, la bague peut être remplacée facilement, sans gaspillage, par l'utilisateur lui-même. Eventuellement, si l'enveloppe protectrice en résine transparente est démontable (cas de la figure 1), l'utilisateur peut facilement ne remplacer que l'élément thermométrique à cristaux liquides.

## Revendications

1. Dispositif adaptable à une quelconque robinetterie telle qu'une robinetterie sanitaire, mitigeur, douchette ou similaire, dispositif du genre constitué par un élément cylindrique (1) adaptable à une extrémité filetée ou non de robinetterie et pouvant comporter des moyens (2) permettant un effet du type brise-jet, aérateur, réducteur de débit ou analogue, caractérisé en ce qu'une feuille thermographique à cristaux liquides (3) est appliquée sur la paroi cylindrique dudit élément cylindrique, et en ce que ladite feuille est recouverte par une enveloppe cylindrique transparente protectrice (4).

2. Dispositif selon la revendication 1, caractérisé en ce que l'enveloppe extérieure transparente présente une face bombée (6) donnant un effet de loupe pour la lecture des chiffres.

3. Dispositif selon la revendication 1, caractérisé en ce que l'enveloppe extérieure transparente (4) présente une face à facettes faisant effet de réflecteur permettant une lecture plus verticale.

4. Dispositif selon l'une quelconque des revendications précédentes, caractérisé en ce que l'enveloppe extérieure (4) est collée ou soudée sur le cylindre (1).

5. Dispositif selon l'une quelconque des revendications précédentes, caractérisé en ce que la bande thermographique (3) est incluse dans l'enveloppe extérieure (4).

6. Dispositif selon l'une quelconque des revendications précédentes, caractérisé en ce que le cylindre (1) comporte à sa partie amont une partie filetée (11).

## Claims

1. A device suitable for fitting to any tap such as a sanitary tap, mixing tap, shower head or similar, of the type comprising a cylindrical element (1) adapted for fitting to a threaded or not end of tap fitting, which may include means (2) such as an anti-splash nozzle, aerating nozzle, a flow-rate restricting nozzle or the like, characterized in that a temperature sensitive liquid crystal sheet (3) is applied around the outer cylindrical wall of said cylindrical element, and in that said sheet is covered by a protective transparent cylindrical envelope (4).

2. A device according to claim 1, wherein the transparent outer envelope has a curved face (6) giving a magnifying glass effect for reading the figures.

3. A thermometer device according to claim 1, wherein the transparent outer envelope (4) has a facetted face providing a reflector effect enabling reading at a more vertical angle.

4. A thermometer device according to any preceding claim, wherein the outer envelope (4) is glued or welded over the cylinder (1).

5. A thermometer device according to any preceding claim, wherein the temperature-sensitive sheet (3) is included within the outer envelope (4).

6. A thermometer device according to any preceding claim, wherein the upstream end of the cylinder (1) includes a threaded portion (11) for fitting to a tap.

## Patentansprüche

1. Vorrichtung, die an eine beliebige Armatur wie Sanitärarmatur, Mischbatterie, Duschkopf oder ähnliches anpaßbar ist, Vorrichtung von der Art, die aus einem zylindrischen Element (1) besteht, das an ein Ende einer Armatur mit oder ohne Gewinde anpaßbar ist, und Mittel (2) aufweisen kann, die eine Wirkung der Art Wasserstrahlregler, Belüfter, Mengenreduzierer oder ähnliches ermöglichen, dadurch gekennzeichnet, daß ein thermographisches; Blatt mit Flüssigkristallen (3) auf die zylindrische Wand dieses zylindrischen Elements aufgebracht ist und daß dieses Blatt mit einer transparenten zylindrischen Schutzhülle (4) bedeckt ist.

2. Vorrichtung nach Anspruch 1, dadurch gekennzeichnet, daß die äußere transparente Hülle eine gewölbte Fläche (6) aufweist, die eine Lupenwirkung zum Lesen der Zahlen ergibt.

3. Vorrichtung nach Anspruch 1, dadurch gekennzeichnet, daß die äußere transparente Hülle (4) eine Facettenoberfläche aufweist, die eine reflektierende Wirkung hat und ein senkrechteres Lesen ermöglicht.

4. Vorrichtung nach einem beliebigen der vorhergehenden Ansprüche, dadurch gekennzeichnet, daß die äußere Hülle (4) auf den Zylinder (1) geklebt oder geschweißt ist.

5. Vorrichtung nach einem beliebigen der vorhergehenden Ansprüche, dadurch gekennzeichnet, daß das thermographische Band (3) in die äußere Hülle (4) eingeschlossen ist.

6. Vorrichtung nach einem beliebigen der vorhergehenden Ansprüche, dadurch gekennzeichnet, daß der Zylinder (1) an seinem, oberen Teil ein Gewindeteil (11) aufweist.

EP 0 241 369 B1

Fig.1

Fig.2